(19) Europäisches Patentamt
European Patent Office
Office européen des brevets

(11) Publication number: **0 137 872**
**B1**

(12) **EUROPEAN PATENT SPECIFICATION**

(45) Date of publication of patent specification: **27.05.87**

(51) Int. Cl.⁴: **C 09 K 7/02,** E 21 B 33/138

(21) Application number: **83306242.5**

(22) Date of filing: **14.10.83**

(54) **Well drilling and completion fluid composition.**

(43) Date of publication of application:
**24.04.85 Bulletin 85/17**

(45) Publication of the grant of the patent:
**27.05.87 Bulletin 87/22**

(84) Designated Contracting States:
**DE FR GB IT NL**

(56) References cited:
**EP-A-0 023 712**
**FR-A-2 188 042**
**US-A-2 571 093**

**W.F. ROGERS: "Composition and properties of oil well drilling fluids", revised edition, pages 222-224,288, Gulf Publishing Company, Houston, Texas, US;**

(73) Proprietor: **HALLIBURTON COMPANY**
**P.O. Drawer 1431**
**Duncan Oklahoma 73536 (US)**

(72) Inventor: **Son, Adelina Javier**
**10210 Meadow Lake**
**Houston Texas 77042 (US)**
Inventor: **Loftin, Royal Edward**
**13215 Verbena Lane**
**Houston Texas 77083 (US)**

(74) Representative: **Wain, Christopher Paul et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 137 872 B1

**Description**

This invention relates to a well drilling and completion fluid.

A great variety of aqueous well drilling and completion fluid compositions have been developed and used heretofore. Problems which have been commonly encountered in the use of such drilling and completion fluids are that when high temperatures are encountered, the fluids become unstable, that is the viscosity and other properties are lost or reduced, and when the fluids come into contact with water-sensitive clay-containing formations or strata, the clay-containing materials slough off the walls of the well bore into the fluids. The sloughing of formation materials into the drilling and completion fluids can cause borehole instability and hole enlargement.

Heretofore, the sloughing of clay-containing formation materials comprising water-sensitive shales into a well bore, when contacted by aqueous drilling or completion fluids, has been reduced by including potassium chloride or potassium hydroxide in the drilling or completion fluids. While aqueous fluids containing potassium chloride or potassium hydroxide are effective in reducing the swelling of clays and the sloughing of clay-containing materials when in contact therewith, a number of other problems are inherent in the use of such solutions.

Drilling fluids containing potassium chloride in the quantity required to provide sufficient potassium ion concentration to prevent clay swelling and sloughing of formation materials, frequently have demonstrated unstable rheological and filtration control properties. The high chloride ion content also causes the fluids to be more corrosive to tubular goods in the well bore and creates disposal problems. In addition, high chloride ion levels in drilling and completion fluids make electric logs and other analytical procedures carried out therein more difficult to interpret.

The use of potassium hydroxide in lieu of potassium chloride brings about more stable drilling and completion fluids, but the quantity of potassium hydroxide that can be used must be limited to prevent the fluids from becoming excessively caustic and corrosive. The presence of hydroxyl ions in the fluids offsets the effectiveness of potassium ions therein because hydroxyl ions promote hydration and dispersion of clays. Further, dispersants must normally be used in drilling or completion fluids containing potassium hydroxide which bring about the adverse result of dispersing cuttings in the fluids.

Other potassium compounds such as potassium carbonate and potassium bicarbonate have been utilized in well treatment fluids, but such compounds also cause the fluids to be unstable, etc.

US—A—2571093 describes a drilling fluid comprising water, a clay, a water loss agent such as starch or ethyl cellulose, and a water-soluble salt to reduce the hydration and swelling of certain easily hydratable clays. The salts include water-soluble salts of a metal above iron in the electromotive series or ammonium salts, which are compatible with the remaining constituents of the mud. This drilling fluid is deleteriously affected by cement, and this problem is overcome in accordance with the teachings of US—A—2571093 by incorporating in the fluid an acid reacting agent such as an acid or acid salt.

We have now found that certain drilling fluids of the general type described in US—A—2571093 can be modified in order to achieve an inhibition of clay sloughing during their use. In particular, we have found that clay sloughing can be substantially reduced or inhibited by using such compositions characterised in that: the clay is present in an amount of from 1 to 50 pounds per barrel (2.85 to 142.6 kg/$m^3$) of the composition and is sepiolite or attapulgite which act as viscosity increasing agents, the stabilising agent is present in an amount of from 1 to 30 pounds per barrel (2.85 to 85.5 kg/$m^3$) of the composition and is selected from pregelatinized starch, vinylacylamide-vinylsulfonate-acrylamide-terpolymer, hydroxyethylcellulose and any mixture of two or more thereof; and the treatment agent is present in an amount of from 1 to 100 pounds per barrel (2.85 to 285 kg/$m^3$) of the composition and is a water-soluble organic acid salt, or mixtures of salts, having the formula

$$R—COOM$$

where R is hydrogen, methyl, ethyl or propyl, and M is potassium, rubidium, cesium or ammonium.

In the fluids of the present invention, the clay-treatment agent substantially prevents sloughing of water-sensitive clay-containing materials contacted by the fluid compositions, but does not make the compositions highly corrosive or toxic. The compositions can optionally include solid weighting agents, additional rheology stabilizers and basic compounds for adjusting the pH of the composition to desired levels.

The water utilized in the compositions can be fresh water, brines or seawater and the viscosity increasing agent used is sepiolite or attapulgite. These clays readily increase the viscosity of fresh water, brines and salt water and do not lose stability at high temperatures, i.e. they maintain the viscosity of an aqueous composition over a temperature range up to about 450°F (232°C). The more preferred of the two viscosity increasing agents is sepiolite clay. The fluid loss reducing and rheology stabilizing agent utilized in accordance with the present invention is selected from the group consisting of pregelatinized starch, vinylacylamide-vinylsulfonate-acrylamide-terpolymer, hydroxyethylcellulose and mixtures thereof. If the drilling and completion fluid composition is to be subjected to temperatures below about 250°F (121°C), pregelatinized starch is preferred for its relatively low cost. When the composition is to be subjected to temperatures in the range of from 250°F up to 450°F (121°C to 232°C), vinylacylamide-vinylsulfonate-acrylamide-terpolymer is preferred in that it retains its stability and effectiveness at such temperatures. As indicated, the fluid loss reducing and rheology stabilizing agent reduces fluid loss to permeable formations encountered in a well bore and functions to maintain the drilling or completion fluid rheological properties at a substantially constant level in spite of solids and cement contamination, salt water intrusion and high temperatures.

The vinylacylamide-vinylsulfonate-acrylamide-terpolymer is available as a fine white granular solid and is prepared by reacting e.g. 2-acrylamido-2 methyl-3-propyl sodium sulfonate, vinylacetamide and acrylamide monomers to form a terpolymer thereof. The terpolymer is readily dissolvable in fresh water, salt water and seawater, and as mentioned above, the terpolymer remains stable and effective over broad pH and temperature ranges. The terpolymer and its synthesis are described in greater detail in West German Patent DE—C—2,931,897 to which reference should be made for further details.

The clay-treatment agent functions to prevent the hydration and swelling of clays and the resultant sloughing of clay-containing materials when in contact with the compositions. The clay-treatment agent utilized in accordance with the present invention is a water-soluble organic acid salt or mixture of salts having the general formula:

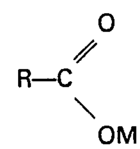

wherein:

R is hydrogen or a methyl, ethyl or propyl radical; and

M is potassium, rubidium, cesium or ammonium.

Such organic acid salts are readily soluble in water, brines and seawater and the cations thereof, for example, potassium, rubidium, cesium and ammonium, react with or otherwise prevent water-sensitive clays from swelling and migrating. The anionic portions of the compounds, comprising the "ester" groups are non-toxic and do not form insoluble compounds with cations normally present in subterranean formations such as sodium, calcium and magnesium. Examples of particularly suitable such compounds are potassium formate, potassium acetate, potassium propionate, potassium butyrate, rubidium formate, rubidium acetate, cesium formate, cesium acetate, ammonium formate, ammonium acetate, ammonium propionate, and ammonium butyrate.

Preferred such clay-treatment salts for use in accordance with the present invention are compounds as defined above wherein M is potassium. Of these, potassium acetate is the most preferred. Potassium acetate has low toxicity, is readily soluble in fresh water, brines and seawater and aqueous compositions including a potassium acetate are considerably less corrosive to tubular goods than the heretofore used compositions.

The clay-treatment organic salt or salts can be present in the aqueous solution in an amount in the range of from 1 to 100 pounds per barrel (2.85 to 285 kg/$m^3$) of the aqueous solution. At concentrations below about 1 pound per barrel (2.85 kg/$m^3$), the composition contains too little potassium, rubidium, cesium or ammonium ions to effectively prevent the swelling of water-sensitive clays and the sloughing of clay-containing materials. At concentrations above about 100 pounds per barrel (285 kg/$m^3$), little additional effect is brought about for the additional cost involved.

As mentioned above, the compositions preferably also include a base, such as sodium or potassium hydroxide present therein in a quantity sufficient to adjust the pH of the composition to a level in the range of from about 8.5 to about 11.5. At such pH range, the compositions are stable and relatively non-corrosive to metal tubular goods.

In addition, the compositions can optionally include a solid weighting agent, such as barite, hematite, etc., for increasing the density thereof to desired levels. The weighting agent can be present in the compositions in an amount such that the compositions have a density as high as 19 pounds per gallon (2.28 g/$cm^3$) while remaining stable, etc. When a weighting agent is included in the compositions it is also advantageous to include an additional rheology stabilizer therein which facilitates the dispersal and suspension of the weighting agent in the compositions. Particularly suitable such rheology stabilizers are the sodium salt of polymerized alkyl naphthalene sulfonic acid (polymerized alkyl naphthalene sodium sulfonate), citric acid and gluconic acid.

In carrying out the methods of the present invention utilizing the compositions, the water-sensitive clay-containing formations which are to be prevented from sloughing are contacted with the composition allowing the clayey materials to base exchange and dehydrate. In this regard, the water sensitive formation can be contacted with a composition of the present invention whereby hydration, swelling and sloughing of clays is inhibited. Preferably, when aqueous treating fluids are utilized which are brought into contact with water-sensitive clay-containing formations, one or more of the clay-treatment salts described above are dissolved in the aqueous fluid. For example, in the drilling or completion of a well, one or more of the clay-treatment salts are dissolved in the drilling or completion fluid prior to introducing the fluid into the

well bore. Upon introducing the fluid into the well bore, the clay treatment salt inhibits the swelling and dispersion of clays contacted therewith and thereby prevents the sloughing of such formations.

The compositions can include one or more weighting agents such as barite, hematite, etc., in an amount sufficient to increase the density thereof up to about 19 pounds per gallon (2.28 g/cm$^3$), such as, an amount in the range of from about 5 to about 600 pounds per barrel (14.25 to 1710 kg/m$^3$) of fluid. As mentioned above, the composition can also include sodium or potassium hydroxide in a quantity in the range of from about 0 to about 5 pounds per barrel (0 to 14.25 kg/m$^3$) of fluid to adjust the pH to a level in the range of from about 8.5 to about 12.0, and an additional rheology stabilizer, such as, polymerized alkyl naphthalene sodium sulfonate, in a quantity in the range of from about 0 to about 5 pounds per barrel (0 to 14.25 kg/m$^3$) of fluid.

A preferred well drilling and completion fluid composition of this invention is comprised of water, sepiolite clay viscosity increasing agent present in the composition an amount in the range of from about 10 to about 30 pounds per barrel (28.5 to 85.5 kg/m$^3$) of composition, a fluid loss reducer and rheology stabilizer selected from the group consisting of pregelatinized starch, vinylacylamide-vinylsulfonate-acrylamide-terpolymer and mixtures thereof present in said composition in an amount in the range of from about 1 to about 20 pounds per barrel (2.85 to 57.0 kg/m$^3$) of composition, a clay treatment agent as previously defined but in which M is potassium, in an amount of from 1 to 30 pounds per barrel (2.85 to 85.5 kg/m$^3$) of composition, and sodium hydroxide present in the composition in an amount sufficient to adjust the pH thereof to a level in the range of from 8 to 11.5.

Another preferred weighted composition is as defined above but also including barite solid weighting agent present in the composition in an amount in the range of from about 5 to about 600 pounds per barrel (14.25 to 1710 kg/m$^3$) and a rheology stabilizing agent comprised of the sodium salt of polymerized alkyl naphthalene sulfonic acid present in the composition in an amount in the range of from about $\frac{1}{4}$ to about 10 pounds per barrel (0.71 to 28.5 kg/m$^3$) of composition.

The most preferred composition of the present invention is comprised of water, sepiolite clay in an amount of 10—25 pounds per barrel (28.5 to 71.3 kg/m$^3$) of composition, vinylacylamide-vinylsulfonate-acrylamide-terpolymer in an amount of about 3—5 pounds per barrel (8.6 to 14.3 kg/m$^3$) of composition, potassium acetate in the amount of 10 pounds per barrel (28.5 kg/m$^3$) of composition, sodium hydroxide in an amount sufficient to adjust the pH of the composition to 9.5, barite weighting agent in an amount sufficient to increase the density thereof to from 8.5 to about 19 pounds per gallon (1.02 to 2.28 g/cm$^3$), the sodium salt of polymerized alkyl naphthalene sulfonic acid in an amount of about 0.5 pound per barrel (1.41 kg/m$^3$) of composition.

In order to facilitate a clear understanding of the compositions of the present invention, the following Examples are given by way of illustration only.

Example 1

Drilling or completion fluid formulations are prepared as follows. Add potassium acetate to seawater and mix to dissolve (about 2 minutes). Add sepiolite clay and mix for 8 minutes to allow the sepiolite to hydrate. Add vinylacylamide-vinylsulfonate-acrylamide-terpolymer, followed by the sodium salt of polymerized alkyl naphthalene sulfonic acid. Adjust the pH of the solution with caustic soda to around 9.0. For a weighted system, add the necessary quantity of barite and mix for another 10 minutes.

The properties of weighted and unweighted fluid formulations prepared in accordance with the above procedure are given in Table I below.

In the following Table I:

I=initial

HR=hot-rolled 16 hours at 150°F (65.6°C)

*Analysis by atomic absorption.

TABLE I
Fluid formulation properties

| Sample No. | 1 | | 2 | | 3 | | 4 | | 5 | |
|---|---|---|---|---|---|---|---|---|---|---|
| Conditions | I | HR | I | HR | I | HR | I | HR | I | HR |
| Water, ml | 350 | | 332 | | 300 | | 279 | | 252 | |
| Sea salt, ppb (kg/$m^3$) | 14.7 (41.9) | | 14.0 (39.9) | | 12.6 (35.9) | | 11.0 (31.4) | | 10.6 (30.2) | |
| Potassium acetate, ppb (kg/$m^3$) | 10.0 (28.5) | | 9.5 (27.1) | | 8.6 (24.5) | | 8.0 (22.8) | | 7.2 (20.5) | |
| Sepiolite, ppb (kg/$m^3$) | 25.0 (71.3) | | 22.5 (64.1) | | 20.0 (57) | | 15.0 (42.8) | | 12.5 (35.6) | |
| Terpolymer, ppb (kg/$m^3$) | 3.0 (8.6) | | 3.0 (8.6) | | 3.0 (8.6) | | 3.0 (8.6) | | 3.0 (8.6) | |
| Sodium hydroxide, ppb (kg/$m^3$) | 0.25 (0.71) | | 0.25 (0.71) | | 0.25 (0.71) | | 0.25 (0.71) | | 0.25 (0.71) | |
| Alkyl naphthalene sodium sulfonate, ppb (kg/$m^3$) | 0.5 (1.4) | | 0.5 (1.4) | | 0.5 (1.4) | | 0.5 (1.4) | | 0.5 (1.4) | |
| Barite ppb (kg/$m^3$) | | | 78 (222) | | 203 (579) | | 299 (852) | | 410 (1170) | |
| YP, lbs/100 $ft^2$ (Pa) | 2 (.96) | 3 (1.4) | 6 (2.9) | 4 (1.9) | 2 (.96) | 4 (1.9) | 4 (1.9) | 2 (.96) | 2 (.96) | 10 (4.8) |
| Gels, I/10 minutes lbs/ 100 $ft^2$ (Pa) | 2/2 (.96/.96) | 2/2 (.96/.96) | 2/4 (.96/1.9) | 2/3 (.96/1.4) | 2/3 (.96/1.4) | 1/3 (.48/1.4) | 2/4 (.96/1.9) | 2/5 (.96/2.4) | 4/8 (1.9/3.8) | 4/8 (1.9/3.8) |
| pH | 9.5 | 9.0 | 9.5 | 9.0 | 9.5 | 8.9 | 9.5 | 8.8 | 9.6 | 8.8 |
| API Fluid loss ml | | 10.6 | | | | | | 8.8 | | |
| Weight, ppg (g/$cm^3$) | 8.6 (1.0) | | 10.0 (1.2) | | 12.0 (1.4) | | 14.0 (1.7) | | 16.0 (1.9) | |
| mg/l K | 10,000* | | | | 10,175* | | | | 10,450* | |

Example 2

The fluid formulations shown in Table I and prepared in accordance with the procedure given in Example 1 are tested for tolerance to solids contamination. Grundite shale is used as the solid contaminant. The shale has the following composition:

| | |
|---|---|
| α-quartz | 20—22% |
| Pyrite | 3—5% |
| Chlorite | 4—6% |
| Illite | 40—45% |
| Smectite and mixed layer clays | 21—25% |
| Amorphous | 4—6% |
| CEC*=10.6 meq/100 grams shale | |
| Potassium | 248 mg/l |
| Magnesium | 1250 mg/l |
| Calcium | 2710 mg/l |
| Sodium | 42 mg/l |

The results of the solids contamination tests are summarized in Table II below.

TABLE II

Drilling or completion fluid formulation tolerance to drill solids

| Solids | | | Fluid weight | | YP | | | | Gels | | | |
|---|---|---|---|---|---|---|---|---|---|---|---|---|
| | | | | | I | | HR | | I | | HR | |
| % | ppb | kg/m³ | ppg | g/cm³ | lbs/100 ft² | Pa | lbs/100 ft² | Pa | lbs/100 ft² | Pa | lbs/100 ft² | Pa |
| 0 | 0 | 0 | 8.6 | 1.0 | 2 | .96 | 3 | 1.4 | 2/2 | .96/.96 | 2/2 | .96/.96 |
| 3 | 10.5 | 29.9 | 8.6 | 1.0 | 2 | .96 | 0 | 0 | 1/2 | .48/.96 | 1/1 | .48/.48 |
| 6 | 21.0 | 59.9 | 8.6 | 1.0 | 2 | .96 | 1 | .48 | 1/1 | .48/.48 | 1/3 | .48/1.4 |
| 10 | 35.0 | 99.8 | 8.6 | 1.0 | 2 | .96 | 1 | .48 | 0/2 | 0/.96 | 1/2 | .48/.96 |
| 15 | 52.5 | 149.6 | 8.6 | 1.0 | 2 | .96 | 4 | 1.9 | 2/4 | .96/1.9 | 1/3 | .48/1.4 |
| 0 | 0 | 0 | 10.0 | 1.2 | 6 | 2.9 | 4 | 1.9 | 2/4 | .96/1.9 | 2/3 | .96/1.4 |
| 3 | 10.5 | 29.9 | 10.0 | 1.2 | 8 | 3.8 | 4 | 1.9 | 3/4 | 1.4/1.9 | 2/3 | .96/1.4 |
| 6 | 21.0 | 59.9 | 10.0 | 1.2 | 4 | 1.9 | 6 | 2.9 | 2/4 | .96/1.9 | 3/3 | 1.4/1.4 |
| 10 | 35.0 | 99.8 | 10.0 | 1.2 | 6 | 2.9 | 6 | 2.9 | 2/4 | .96/1.9 | 2/3 | .96/1.4 |
| 15 | 52.5 | 149.6 | 10.0 | 1.2 | 6 | 2.9 | 4 | 1.9 | 2/6 | .96/2.9 | 2/5 | .96/2.4 |
| 0 | 0 | 0 | 12.0 | 1.4 | 2 | .96 | 4 | 1.9 | 2/3 | .96/1.4 | 1/3 | .48/1.4 |
| 3 | 10.5 | 29.9 | 12.0 | 1.4 | 0 | 0 | 4 | 1.9 | 2/3 | .96/1.4 | 1/4 | .48/1.9 |
| 6 | 21.0 | 59.9 | 12.0 | 1.4 | 2 | .96 | 4 | 1.9 | 2/3 | .96/1.4 | 1/3 | .48/1.4 |
| 10 | 35.0 | 99.8 | 12.0 | 1.4 | 4 | 1.9 | 4 | 1.9 | 2/4 | .96/1.9 | 2/3 | .96/1.4 |
| 15 | 52.5 | 149.6 | 12.0 | 1.4 | 4 | 1.9 | 4 | 1.9 | 2/5 | .96/2.4 | 2/6 | .96/2.9 |

TABLE II (contd.)

Drilling or completion fluid formulation tolerance to drill solids

| | Solids | | Fluid weight | | YP | | | | Gels | | | |
|---|---|---|---|---|---|---|---|---|---|---|---|---|
| | | | | | I | | HR | | I | | HR | |
| % | ppb | kg/m³ | ppg | g/cm³ | lbs/100 ft² | Pa | lbs/100 ft² | Pa | lbs/100 ft² | Pa | lbs/100 ft² | Pa |
| 0 | 0 | 0 | 14.0 | 1.7 | 4 | 1.9 | 2 | .96 | 2/4 | .96/1.9 | 2/5 | .96/2.4 |
| 3 | 10.5 | 29.9 | 14.0 | 1.7 | 0 | 0 | 2 | .96 | 2/3 | .96/1.4 | 3/5 | 1.4/2.4 |
| 6 | 21.0 | 59.9 | 14.0 | 1.7 | 3 | 1.4 | 4 | 1.9 | 3/5 | 1.4/2.4 | 2/5 | .96/2.4 |
| 10 | 35.0 | 99.8 | 14.0 | 1.7 | 4 | 1.9 | 4 | 1.9 | 2/5 | .96/2.4 | 2/6 | .96/2.9 |
| 15 | 52.5 | 149.6 | 14.0 | 1.7 | 6 | 2.9 | 4 | 1.9 | 2/6 | .96/2.9 | 2/7 | .96/3.4 |
| 20 | 70.0 | 199.5 | 14.0 | 1.7 | 10 | 4.8 | 12 | 5.8 | 3/13 | 1.4/6.2 | 4/12 | 1.9/5.8 |
| 25 | 87.5 | 249.4 | 14.0 | 1.7 | 16 | 7.7 | 16 | 7.7 | 4/20 | 1.9/9.6 | 5/19 | 2.4/9.1 |
| 30 | 105 | 299.3 | 14.0 | 1.7 | 22 | 10.6 | 26 | 12.5 | 5/28 | 2.4/13.4 | 8/29 | 3.8/13.9 |

Up to 70 ppb (199.5 $kg/m^3$) solids are tolerated by the formulations without significant changes in the rheology even at 14 ppg (1.7 $g/cm^3$) mud weight. Solids up to 105 ppb (299.3 $kg/m^3$) added to a 14 ppg (1.7 $g/cm^3$) fluid increase the yield point and the gels, although the rheological properties are still acceptable. The terpolymer is kept at 3 ppb (8.6 $kg/m^3$) in all the tests. Increasing the concentration of the vinylacylamide-vinylsulfonate-acrylamide-terpolymer promotes rheological stabilization and higher levels of solids can be tolerated by the fluid formulations.

Example 3

Drilling or completion fluids of various weights are formulated in accordance with the procedure of Example 1 and the quantities of components given in Table 1, except the concentration of the alkyl naphthalene sodium sulfonate is increased to 5 ppb (14.3 $kg/m^3$). The fluids are tested for green cement contamination by adding 3% green cement and 10% drill solids to the fluids. The results are summarized in Table III below.

TABLE III

Drilling or completion fluid tolerance to green cement contamination

| Weight, ppg (g/$cm^3$) | 8.6 (1.0) | | 10.0 (1.2) | | 12.0 (1.4) | | 14.0 (1.7) | | 16.0 (1.9) | |
|---|---|---|---|---|---|---|---|---|---|---|
| | I | HR | I | HR | I | HR | I | HR | I | HR |
| PV, cps (Pa s) | 8 (.008) | 10 (.01) | 12 (.012) | 12 (.012) | 19 (.019) | 22 (.022) | 24 (.024) | 25 (.025) | 36 (.036) | 50 (.050) |
| YP, lbs/100 $ft^2$ (Pa) | 2 (.96) | 2 (.96) | 2 (.96) | 4 (1.9) | 4 (1.9) | 10 (4.8) | 2 (.96) | 8 (3.8) | 12 (5.8) | 22 (10.6) |
| Gels, lbs/100 $ft^2$ (Pa) | 2/3 (.96/1.4) | 1/3 (.48/1.4) | 2/2 (.96/.96) | 2/5 (.96/2.4) | 2/4 (.96/1.9) | 4/17 (1.9/8.2) | 2/4 (.96/1.9) | 4/13 (1.9/6.2) | 4/22 (1.9/10.6) | 17/52 (8.2/25) |
| pH | 11.3 | 11.9 | 11.3 | 11.8 | 11.4 | 11.8 | 11.4 | 11.8 | 11.5 | 11.8 |
| API Fluid loss, $cm^3$ | | 19.0 | | 17.5 | | 13.5 | | 12.2 | | |

I=initial

HR=hot-rolled 16 hours at 150°F (65.6°C).

Rheological properties can be improved by the addition of more alkyl naphthalene sodium sulfonate or the vinylacylamide-vinylsulfonate-acrylamide-terpolymer. The latter is more effective. For example, the addition of 2 ppb (5.7 kg/$m^3$) of the alkyl naphthalene sodium sulfonate to a 16 ppg (1.9 g/$cm^3$) sample, hot-rolled for 16 hours, decreases the yield point from 22 to 16 lbs/100 $ft^2$ (10.6 to 7.7 Pa) and gels from 17/52 to 5/25 lbs/100 $ft^2$ (8.2/25 to 2.4/12 Pa). On the other hand, the addition of 2 ppb (5.7 kg/$m^3$) of the terpolymer brings the yield point from 22 to 4 lbs/100 ft, (10.6 to 1.9 Pa) and the gels from 17/52 to 2/3 lbs/100 $ft^2$ (8.2/25 to .96/1.4 Pa).

Example 4

The procedure of Example 3 is repeated except that 5% green cement and 10% drill solids are used. The 5% green cement and 10% drill solids result in higher but still acceptable gels. The fluid formulations are as shown in Table 1 except the alkyl naphthalene sodium sulfonate level is raised to 6 ppb (17.1 kg/$m^3$). The results of these tests are given in Table IV below.

TABLE IV
Drilling or completion fluid tolerance to green cement contamination

| Weight, ppg (g/cm³) | 8.6 (1.0) I | 8.6 (1.0) HR | 10.0 (1.2) I | 10.0 (1.2) HR | 12.0 (1.4) I | 12.0 (1.4) HR | 14.0 (1.7) I | 14.0 (1.7) HR | 16.0 (1.9) I | 16.0 (1.9) HR |
|---|---|---|---|---|---|---|---|---|---|---|
| PV, cps (Pa s) | 12 (.012) | 11 (.011) | 12 (.012) | 17 (.017) | 19 (.019) | 24 (.024) | 23 (.023) | 26 (.026) | 32 (.032) | 40 (.040) |
| YP, lbs/100 $ft^2$ (Pa) | 0 (0) | 24 (11.5) | 2 (.96) | 11 (5.3) | 4 (1.9) | 20 (9.6) | 2 (.96) | 12 (5.8) | 10 (4.8) | 28 (13.4) |
| Gels, lbs/100 $ft^2$ (Pa) | 2/3 (.96/1.4) | 23/47 (11.0/22.6) | 2/3 (.96/1.4) | 5/28 (2.4/13.4) | 2/11 (.96/5.3) | 14/51 (6.7/24.5) | 2/13 (.96/6.2) | 5/35 (2.4/16.8) | 5/32 (2.4/15.4) | 15/76 (7.2/36.5) |
| pH | 11.8 | 12.0 | 11.8 | 12.0 | 11.8 | 12.0 | 11.8 | 12.0 | 11.7 | 11.8 |

I=initial
HR=hot-rolled 16 hours at 150°F (65.6°C).

Example 5

The temperature stability of water-based drilling or completion fluids is often limited by the polymeric components. The terpolymer used in this system is stable to over 450°F (232°C) and is resistant to hydrolysis.

The temperature stability of the 14 ppg (1.7 g/cm$^3$) fluid shown in Table I is modified to include 5 ppb (14.3 kg/m$^3$) vinylacylamide-vinylsulfonate-acrylamide-terpolymer and 1 ppb (2.85 kg/m$^3$) alkyl naphthalene sodium sulfonate.

| Fluid properties: | |
|---|---|
| PV, cps (Pa s) | 31 (.031) |
| YP, lbs/100 ft$^2$ (Pa) | 8 (3.8) |
| Gels lb/100 ft$^2$ (Pa) | 3/4 (1.4/1.9) |
| API Fluid loss, cm$^3$ | 6.6 |
| HTHP Filtrate (300°F—149°C), cm$^3$ | 34.0 |
| pH | 9.5 |

The effect of temperature and pressure on the fluid is determined using a (Model 50 Fann) consistometer. The fluid becomes thin with higher temperature and pressure and recovers its consistency on cooling as shown in Table V below.

TABLE V
Consistometer data

| Temperature °F | Temperature °C | Pressure psi | Pressure MPa | Consistometer units* |
|---|---|---|---|---|
| 75 | 24 | 1,000 | 6.89 | 56 |
| 100 | 38 | 2,000 | 13.8 | 44 |
| 150 | 66 | 4,000 | 27.6 | 36 |
| 200 | 93 | 7,000 | 48.2 | 30 |
| 250 | 121 | 8,000 | 55.1 | 26 |
| 300 | 149 | 9,000 | 62.0 | 24 |
| 350 | 177 | 9,500 | 65.5 | 20 |
| 375 | 191 | 9,500 | 65.5 | 20 |
| 400 | 204 | 10,000 | 68.9 | 22 |
| 440 | 227 | 10,000 | 68.9 | 12 |
| cooled to 75°F (24°C) | | | | 50 |

* arbitrary units.

The rheological properties of the 14 ppg (1.7 g/cm$^3$) fluid, contaminated with 35 ppb (99.8 kg/m$^3$) drill solids, remains stable after 16 hours static aging at 350°F (177°C) as shown in Table VI below.

TABLE VI
Effect of temperature on rheology

Drilling or completion fluid: 14 ppg (1.7 g/$cm^3$)

Drill solids: 35 ppb (99.8 kg/$m^3$)

Terpolymer: 5 ppb (14.3 kg/$m^3$)

| Properties | Initial | Static-aged |
|---|---|---|
| PV, cps (Pa s) | 32 (.032) | 21 (.021) |
| YP, lbs/100 $ft^2$ (Pa) | 8 (3.8) | 6 (2.9) |
| Gels lbs/100 $ft^2$ (Pa) | 2/4 (.96/1.9) | 2/5 (.06/2.4) |
| pH | 7.1 | 7.1 |
| API Filtrate, $cm^3$ | | 14.5 |

Example 6

Shale stabilization tests are conducted with gumbo shale (containing over 50% smectite) to determine how much potassium is needed for optimum stabilization. Small pieces of gumbo shale are added to unweighted fluids with varying amounts of potassium and hot-rolled for 16 hours at 150°F (65.6°C). The results of these tests are given in Table VII below.

TABLE VII
Drilling and completion fluid shale stabilization

| $CH_3CO_2K$ ppb (kg/$m^3$) | 5 (14.3) | 10 (28.5) | 15 (42.8) | 20 (57) | 25 (71.3) | 30 (85.5) |
|---|---|---|---|---|---|---|
| ppm K* | 5650 | | 16250 | | | 32250 |
| Wt. of shale init., grams | 21.43 | 14.67 | 11.48 | 12.51 | 10.32 | 9.46 |
| Wt. of shale, after hot-rolling | 18.17 | 11.08 | 9.64 | 10.02 | 8.22 | 7.92 |
| Wt. loss, grams | 3.26 | 3.59 | 1.84 | 2.49 | 2.10 | 1.54 |
| % Loss | 15.21 | 24.47 | 16.03 | 19.90 | 20.45 | 16.28 |

* analysis by atomic absorption.

Each shale sample remains in solid form with no cracks. Each sample shows signs of dehydration. The results indicate that even with 5 ppb (14.3 kg/$m^3$) (less than 1% K), fluids have good clay stabilization properties.

Example 7

The fluids of this invention can be prepared in fresh water. Other polymers, such as starch, hydroxyethylcellulose, etc., can be substituted for the terpolymer in low temperature applications. The starch-containing fluids can be converted to high temperature fluids if needed. Examples of fresh water formulations with different polymers are given in Tables VIII and IX below.

TABLE VIII
Fresh water, unweighted fluids

| | 1 | | 2 | | 3 | | 4 | |
|---|---|---|---|---|---|---|---|---|
| Additives, ppb (kg/m$^3$) | | | | | | | | |
| Potassium acetate | 10.0 (28.5) | | 10.0 (28.5) | | 10.0 (28.5) | | 10.0 (28.5) | |
| Sepiolite | 15.0 (42.8) | | 15.0 (42.8) | | 15.0 (42.8) | | 15.0 (42.8) | |
| Starch | 10.0 (28.5) | | 5.0 (14.3) | | 7.0 (20.0) | | 10.0 (28.5) | |
| Vinylacylamide-vinylsulfonate-acrylamide-terpolymer | | | | | 2.0 (5.7) | | | |
| Alkyl naphthalene sodium sulfonate | 0.5 (1.4) | | 0.5 (1.4) | | 0.5 (1.4) | | | |
| Hydroxyethylcellulose | | | 2.0 (5.7) | | | | | |
| Sodium hydroxide | 0.25 (0.7) | | 0.25 (0.7) | | 0.25 (0.7) | | 0.25 (0.7) | |
| | I | HR | I | HR | I | HR | I | HR |
| AV, cps (Pa s) | 13 (.013) | 12 (.012) | 8 (.008) | 6.5 (.006) | 9 (.009) | 9 (.009) | 8 (.008) | 10 (.010) |
| PV, cps (Pa s) | 8 (.008) | 7 (.007) | 8 (.008) | 6 (.006) | 8 (.008) | 8 (.008) | 6 (.006) | 7 (.007) |
| YP, lbs/100 ft$^2$ (Pa) | 10 (4.8) | 10 (4.8) | 0 (0) | 1 (.48) | 2 (.96) | 2 (.96) | 4 (1.9) | 6 (2.9) |
| Gels | 4/7 (1.9/3.4) | 4/7 (1.9/3.4) | 0/2 (0/.96) | 0/2 (0/.96) | 0/2 (0/.96 | 1/2 (.48/.96) | 2/8 (.96/3.8) | 2/8 (.96/3.8) |
| pH | 10.8 | 9.8 | 10.7 | 9.8 | 10.1 | 9.7 | 10.5 | 10.6 |
| API Fluid loss, cm$^3$ | | 6.0 | | 10.6 | | 6.5 | | 6.0 |
| ppm Potassium | 10,000 | | 10,000 | | 10,000 | | 10,000 | |

I=initial
HR=hot-rolled for 16 hours at 150°F (65.6°C).

TABLE IX
Fresh water, weighted fluids

| | 1 | | 2 | | 3 | | 4 | |
|---|---|---|---|---|---|---|---|---|
| Additives, ppb (kg/m$^3$) | | | | | | | | |
| Potassium acetate | 9.5 (27.1) | | 8.6 (24.5) | | 8.0 (22.8) | | 6.5 (18.5) | |
| Sepiolite | 15.0 (42.8) | | 15.0 (42.8) | | 15.0 (42.8) | | 10.0 (28.5) | |
| Starch | 10.0 (28.5) | | 10.0 (28.5) | | 10.0 (28.5) | | | |
| Vinylacylamide-vinylsulfonate-acrylamide-terpolymer | | | | | | | 3.0 (8.6) | |
| Alkyl naphthalene sodium sulfonate | 0.5 (1.4) | | 0.5 (1.4) | | 5.0 (14.3) | | 5.0 (14.3) | |
| Sodium hydroxide | 0.25 (0.7) | | 0.25 (0.7) | | 0.25 (0.7) | | 0.5 (1.4) | |
| Barite | 78.0 (222) | | 203.0 (579) | | 299.0 (852) | | 564.0 (1607) | |
| | I | HR | I | HR | I | HR | I | HR |
| AV, cps (Pa s) | 12 (.012) | 13 (.013) | 23 (.023) | 28 (.028) | 32.5 (.032) | 34 (.034) | 71 (.071) | 66 (.066) |
| PV, cps (Pa s) | 9 (.009) | 8 (.008) | 16 (.016) | 12 (.012) | 20 (.020) | 25 (.025) | 50 (.050) | 48 (.048) |
| YP, lbs/100 ft$^2$ (Pa) | 6 (2.9) | 10 (4.8) | 14 (6.7) | 32 (15.4) | 25 (12) | 18 (8.6) | 42 (20.1) | 35 (16.8) |
| Gels lbs/100 ft$^2$ (Pa) | 0/4 (0/1.9) | 2/17 (0.96/8.2) | 4/29 (1.9/13.9) | 24/50 (11.5/24) | 8/14 (3.8/6.7) | 9/30 (4.3/14.4) | 10/46 (4.8/22.1) | 7/25 (3.4/12) |
| pH | | 9.9 | | 9.3 | | 8.5 | | 8.2 |
| API Fluid loss, cm$^3$ | | 5.8 | | 9.6 | | 7.0 | | 5.6 |
| Wt. ppg (g/cm$^3$) | 10.0 (1.2) | | 12.0 (1.4) | | 14.0 (1.7) | | 18.6 (2.2) | |
| ppm Potassium | 10,000 | | 10,000 | | 10,000 | | 10,000 | |

I=initial
HR=hot-rolled for 16 hours at 150°F (65.6°C).

Example 8

The fresh water fluids are also tested for tolerance to solids contamination. The results are summarized in Table X below. Formulation 1, with no potassium acetate, gives high yield point and gels. In the presence of potassium acetate (Formulation 2), the yield points and the gels are much lower. This demonstrates that potassium acetate has improved the ability of the fluid to tolerate solids contamination (grundite shale). Formulation 3 with 70 ppb (199.5 kg/$m^3$) drill solids shows insignificant changes in rheological properties. The addition of the terpolymer causes further lowering of the yield point and the gels, indicating that the terpolymer also improves tolerance to solids contamination promoting rheological stabilization.

TABLE X
Tolerance to solids contamination, fresh water fluids

| | 1 | | 2 | | 3 | | 4 | |
|---|---|---|---|---|---|---|---|---|
| Additives, ppb (kg/m³) | | | | | | | | |
| Potassium acetate | | | 10.0 (28.5) | | 10.0 (28.5) | | 10.0 (28.5) | |
| Sepiolite | 15.0 (42.8) | | 15.0 (42.8) | | 15.0 (42.8) | | 15.0 (42.8) | |
| Starch | | | | | | | 7.0 (20.0) | |
| Vinylacylamide-vinylsulfonate-acrylamide-terpolymer | | | | | | | 2.0 (5.7) | |
| Alkyl naphthalene sodium sulfonate | 0.5 (1.4) | | 0.5 (1.4) | | 0.5 (1.4) | | 0.5 (1.4) | |
| Sodium hydroxide | 0.25 (0.7) | | 0.25 (0.7) | | 0.25 (0.7) | | 0.25 (0.7) | |
| Grundite shale | 35.0 (99.8) | | 35.0 (99.8) | | 70.0 (199.5) | | 70.0 (199.5) | |
| | I | H | I | H | I | H | I | H |
| AV, cps (Pa s) | 67 (.067) | 53 (.053) | 13 (.013) | 12 (.012) | 14 (.014) | 13 (.013) | 13 (.013) | 12 (.012) |
| PV, cps (Pa s) | 28 (.028) | 14 (.014) | 10 (.010) | 9 (.009) | 10 (.010) | 10 (.010) | 12 (.012) | 11 (.011) |
| YP, lbs/100 ft² (Pa) | 78 (37) | 78 (37) | 6 (2.9) | 6 (2.9) | 7 (3.4) | 5 (2.4) | 2 (.96) | 2 (.96) |
| Gels | 16/22 (7.7/10.6) | 38/38 (18.2/18.2) | 3/6 (1.4/2.9) | 3/8 (1.4/3.8) | 3/10 (1.4/4.8) | 3/7 (1.4/3.4) | 2/2 (.96/.96) | 2/2 (.96/.96) |
| ppm Potassium | 0.0 | | 10,000 | | 10,000 | | 10,000 | |

I=initial
HR=hot-rolled for 16 hours at 150°F (65.6°C).

Example 9

Fresh water fluids are prepared containing 10,000 ppm K using potassium chloride and potassium acetate. Pieces of gumbo shale with over 50% smectite are immersed in the fluids and hot-rolled for 16 hours at 150°F (65.6°C). The potassium acetate demonstrates better shale stabilization qualities.

Data:

| | |
|---|---|
| 1) KCl fluid | |
| Wt. of gumbo shale | 7.45 grams |
| After 16 hrs 150°F (65.6°C) hot-rolling | 6.00 grams |
| Weight loss | 1.45 grams |
| % Weight loss | 19.45% |
| 2) $CH_3CO_2K$ fluid | |
| Weight of gumbo shale | 7.45 grams |
| After 16 hrs 150°F (65.6°C) hot-rolling | 6.48 grams |
| Weight loss | 0.97 grams |
| % Weight loss | 13.02% |

Example 10

Corrosion is a problem with potassium chloride solutions which are much below saturation levels. The potassium acetate fluid is tested for corrosion properties.

Solutions of potassium chloride and potassium acetate are prepared containing 10,000 ppm K. Corrosion tests are run for 167 hours at 150°F (65.6°C). With the KCl fluid, the corrosion rate is 13 mils ($3.3\times10^{-4}$m) per year while with the potassium acetate fluid, the corrosion rate is 3.6 mils ($9.1\times10^{-5}$m) per year, a four-fold improvement.

Example 11

Aqueous solutions (fresh water) of potassium acetate, potassium formate, ammonium formate, ammonium acetate and rubidium acetate are prepared containing 10,000 ppm of cation. Pieces of gumbo shale with over 50% smectite are immersed in the solutions and hot-rolled for 16 hours at 150°F (65.6°C). For comparison purposes pieces of the same gumbo shale are hot-rolled for the same time and temperature in fresh water alone and in a fresh water solution of potassium citrate. The results of these tests are given in Table XI below.

TABLE XI
Shale stabilization by various organic acid salts

| Organic acid salt used | Initial gumbo shale weight, gms. | Weight of gumbo shale after hot-rolling, gms. | Weight loss, gms. | % Loss | pH of solution |
|---|---|---|---|---|---|
| None | 8.83 | —0— (Shale disintegrated) | 8.83 | 100 | 7.2 |
| Potassium acetate | 5.42 | 4.47 | 0.95 | 17.53 | 8.4 |
| Potassium formate | 7.55 | 6.80 | 0.75 | 9.93 | 7.8 |
| Ammonium formate | 8.79 | 8.40 | 0.39 | 4.44 | 7.8 |
| Ammonium acetate | 7.62 | 7.45 | 0.17 | 2.23 | 7.9 |
| Rubidium acetate | 4.39 | 4.17 | 0.22 | 5.01 | 8.0 |
| Potassium citrate | 8.39 | 5.43 | 2.96 | 35.28 | 9.5 |

From Table XI it can be seen that the various organic acid salts utilized in accordance with the present invention provide excellent shale stabilization.

**Claims**

1. A well drilling and completion fluid composition for the substantial inhibition of sloughing of clay-containing minerals in a well bore, which comprises water, clay, a fluid loss reducing and rheology stabilizing agent, and a clay treatment agent; characterised in that: the clay is present in an amount of from 1 to 50 pounds per barrel (2.85 to 142.6 kg/$m^3$) of the composition and is sepiolite or attapulgite which act as viscosity increasing agents, the stabilizing agent is present in an amount of from 1 to 30 pounds per barrel (2.85 to 85.5 kg/$m^3$) of the composition and is selected from pregelatinized starch, vinylacylamide-vinylsulfonate-acrylamide-terpolymer, hydroxyethylcellulose and any mixture of two or more thereof; and the treatment agent is present in an amount of from 1 to 100 pounds per barrel (2.85 to 285 kg/$m^3$) of the composition and is a water-soluble organic acid salt, or mixture of salts, having the formula

$$R—COOM$$

where R is hydrogen, methyl, ethyl or propyl, and M is potassium, rubidium, cesium or ammonium.

2. A composition according to claim 1, which further includes a base in an amount sufficient to adjust the pH of the composition to be from 8.5 to 11.5.

3. A composition according to claim 1 or 2, which further includes an additional rheology stabilizer selected from polymerized alkyl naphthalene sodium sulfonate, citric acid and gluconic acid.

4. A composition according to claim 3, wherein said rheology stabilizer is the sodium salt of polymerized alkyl naphthalene sulfonic acid and is present in said composition in an amount of from 0.25 to 10 pounds per barrel (0.7 to 28.5 kg/$m^3$) of composition.

5. A composition according to claim 1, which comprises sepiolite clay viscosity increasing agent, vinylacylamide-vinylsulfonate-acrylamide-terpolymer fluid loss reducing and rheology stabilizing agent, potassium acetate clay treatment agent, and sodium hydroxide present in said composition in an amount of from 1/8 to 2 pounds per barrel (0.36 to 5.7 kg/$m^3$) of composition.

6. A method of preventing clays in a clay-containing formation penetrated by a well bore, from sloughing when contacted by an aqueous fluid introduced into the well bore, which method comprises introducing into said well bore a well drilling and completion fluid as defined in any of claims 1 to 5.

7. In the drilling and completion of a well bore which penetrates a clay-containing formation, the use of a fluid composition as defined in any of claims 1 to 5 to substantially inhibit sloughing of clay in the well bore.

**Patentansprüche**

1. Fluide Zusammensetzung zum Bohren und Komplettieren von Bohrlöchern, die das Abstreifen von tonhaltigen Mineralen in einem Bohrloch im wesentlichen verhindert und Wasser, Ton, ein den Flüssigkeitsverlust verminderndes und die Fließeigenschaften stabilisierendes Mittel und ein Tonbehandlungsmittel enthält, dadurch gekennzeichnet, daß der Ton in einer Menge im Bereich von 1 bis 50 Pfund pro Barrel entsprechend 2,85 bis 142,6 kg pro $m^3$ in der Zusammensetzung enthalten und Sepiolit oder Attapulgit ist, die als viskositätserhöhende Mittel wirken, daß das stabilisierende Mittel in einer Menge im Bereich von 1 bis 30 Pfund pro Barrel entsprechend 2,85 bis 85,5 kg/$m^3$ in der Zusammensetzung enthalten und aus vorgelierter Stärke, einem Terpolymeren aus Vinylacylamid, Vinylsulfonat und Acrylamid, Hydroxyethylcellulose oder einer Mischung aus zwei oder mehr dieser Stoffe ausgewählt ist, und daß das Tonbehandlungsmittel in einer Menge im Bereich von 1 bis 100 Pfund pro Barrel entsprechend 2,85 bis 285 kg/$m^3$ in der Zusammensetzung enthalten und ein wasserlösliches Salz oder Salzgemisch organischer Säure der allgemeinen Formel

$$R—COOM$$

ist, in der R Wasserstoff, Methyl, Ethyl oder Propyl und M Kalium, Rubidium, Caesium oder Ammonium ist.

2. Zusammensetzung nach Anspruch 1, gekennzeichnet durch den weiteren Zusatz einer ausreichenden Menge Base, um den pH-Wert der Zusammensetzung auf einen Wert im Bereich von 8,5 bis 11,5 einzustellen.

3. Zusammensetzung nach Anspruch 1 oder 2, dadurch gekennzeichnet, daß in der Zusammensetzung ein zusätzliches, die Fließeigenschaften stabilisierendes Mittel enthalten und aus der Gruppe polymerisiertes Natrium-Alkylnaphthalinsulfonat, Zitronensäure, Gluconsäure ausgewählt ist.

4. Zusammensetzung nach Anspruch 3, dadurch gekennzeichnet, daß das die Fließeigenschaften stabilisierende Mittel das Natriumsalz von polymerisierter Alkylnaphthalinsulfonsäure und in der Zusammensetzung in einer Menge im Bereich von 0,25 bis 10 Pfund pro Barrel entsprechend 0,7 bis 28,5 kg/$m^3$ der Zusammensetzung enthalten ist.

5. Zusammensetzung nach Anspruch 1, enthaltend Sepiolit-Ton als viskositätserhöhendes Mittel, das Terpolymer aus Vinylacylamid, Vinylsulfonat und Acrylamid als Flüssigkeitsverlust verminderndes und die Fließeigenschaften stabilisierendes Mittel, Kaliumacetat als Tonbehandlungsmittel, und Natriumhydroxid in einer Menge im Bereich von 1/8 bis 2 Pfund pro Barrel entsprechend 0,36 bis 5,7 kg/$m^3$ der Zusammensetzung.

6. Verfahren zur Verhinderung des Abstreifens von Tonen in einer von einem Bohrloch durchsetzten, tonhaltigen Formation bei Berührung mit einem in das Bohrloch eingebrachten wäßrigen Fluid, bei welchem Verfahren ein Bohr- und Komplettierungsfluid nach einem der Ansprüche 1 bis 5 in das Bohrloch eingebracht wird.

7. Verwendung einer fluiden Zusammensetzung nach einem der Ansprüche 1 bis 5 beim Bohren und Komplettieren eines Bohrlochs, das eine tonhaltige Formation durchsetzt, um das Abstreifen von Ton im Bohrloch im wesentlichen zu verhindern.

**Revendications**

1. Une composition de fluide de forage et de complétion pour l'inhibition substantielle du détachement de matières minérales contenant de l'argile dans un forage qui comprend de l'eau, une argile, un agent réduisant la perte de fluide et stabilisant la rhéologie et un agent de traitement de l'argile; caractérisée en ce que: l'argile est présente en une quantité de 1 à 50 lb/bbl (2,85 à 142,6 kg/$m^3$) de la composition et est une sépiolite ou une attapulgite qui agissent comme des agents accroissant la viscosité, l'agent stabilisant est présent en une quantité de 1 à 30 lb/bbl (2,85 à 85,5 kg/$m^3$) de la composition et est choisi parmi l'amidon prégélatinisé, un terpolymère de vinylacylamide-vinylsulfonate-acrylamide, l'hydroxyéthylcellulose et un mélange quelconque de deux ou plus d'entre eux; et l'agent de traitement est présent en une quantité de 1 à 100 lb/bbl (2,85 à 285 kg/$m^3$) de la composition et est un sel d'acide organique soluble dans l'eau ou un mélange de sels ayant pour formule:

$$R—COOM$$

dans laquelle R est un atome d'hydrogène, un groupe méthyle, éthyle ou propyle et M est le potassium, le rubidium, le césium ou l'ammonium.

2. Une composition selon la revendication 1 qui comprend de plus une base en une quantité suffisante pour ajuster le pH de la composition pour qu'il soit de 8,5 à 11,5.

3. Une composition selon la revendication 1 ou 2 qui comprend de plus un stabilisant additionnel de la rhéologie choisi parmi un alkylnaphtalènesulfonate de sodium polymérisé, l'acide citrique et l'acide gluconique.

4. Une composition selon la revendication 3 dans laquelle ledit stabilisant de la rhéologie est le sel de

sodium d'un acide alkylnaphtalènesulfonique polymérisé et est présent dans ladite composition en une quantité de 0,25 à 10 lb/bbl (0,7 à 28,5 kg/$m^3$) de composition.

5. Une composition selon la revendication 1 qui comprend un agent d'accroissement de la viscosité qui est une argile sépiolite, un agent stabilisant la rhéologie et réduisant la perte de fluide qui est un terpolymère de vinylacylamide-vinylsulfonate-acrylamide, un agent de traitement de l'argile qui est l'acétate de potassium, et de l'hydroxyde de sodium présent dans ladite composition en une quantité de 1/8 à 2 lb/bbl (0,36 à 5,7 kg/$m^3$) de la composition.

6. Un procédé pour éviter que des argiles d'une formation contenant une argile dans laquelle pénètre un forage se détachent au contact d'un fluide aqueux introduit dans le forage, lequel procédé comprend l'introduction dans ledit forage d'un fluide de forage et de complétion comme défini dans l'une quelconque des revendications 1 à 5.

7. Dans le forage et la complétion d'un puits qui pénètre dans une formation contenant une argile, l'utilisation d'une composition de fluide comme défini dans l'une quelconque des revendications 1 à 5 pour inhiber pratiquement le détachement d'argile dans le forage.